# EUROPÄISCHE PATENTSCHRIFT

(11) **EP 3 259 493 B1**
(45) Veröffentlichungstag und Bekanntmachung des Hinweises auf die Patenterteilung: **19.12.2018**
(21) Anmeldenummer: 16701036.2
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051088
(87) Internationale Veröffentlichungsnummer: WO 2016/131591

(56) Entgegenhaltungen:
- DE-A1-102010 040 660
- DE-A1-102011 089 167
- DE-A1-102012 013 248
- DE-A1-102012 219 437

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Bei einem gängigen Doppelkupplungsgetriebe sind auf den Eingangswellen des ersten Teilgetriebes und des zweiten Teilgetriebes Festzahnräder der jeweiligen Radebenen drehfest angeordnet. Um im Fahrbetrieb einen einwandfreien Momentenfluss durch das Doppelkupplungsgetriebe zu gewährleisten, sind die Eingangswellen entsprechend materialintensiv auszulegen. Zudem drehen sämtliche Festzahnräder der jeweils aktivierten Eingangswelle im Fahrbetrieb mit, wodurch sich ein hohes Trägheitsmoment des aktivierten Teilgetriebes ergibt.

Aus der DE 10 2012 219 437 A1 ist ein Getriebe mit einer ersten Eingangswelle und einer zweiten Eingangswelle bekannt. Aus der DE 10 2010 040 660 A1 ist ein Doppelkupplungsgetriebe in Vorgelegebauweise bekannt, welches unter den Wortlaut des Oberbegriffs des Anspruchs 1 fällt. Aus der DE 10 2012 013 248 A1 ist eine Antriebsvorrichtung für Kraftfahrzeuge bekannt. Aus der DE 10 2011 089 167 A1 ist ein Doppelkupplungsgetriebe in Vorgelegebauweise bekannt.

Die Aufgabe der Erfindung besteht darin, ein Doppelkupplungsgetriebe bereitzustellen, das bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruchs 1 gelöst. Besonders vorteilhafte Weiterbildungen und Ausgestaltungen der Erfindung sind Gegenstand der abhängigen Ansprüche.

Gemäß dem Patentanspruch 1 weist die Abtriebswelle ein in der Axialrichtung beidseitig schaltbares erstes Schaltelement (SE-F) auf, mit dem die erste, zweite und dritte Radebene des ersten Teilgetriebes mit der Abtriebswelle kuppelbar oder davon abkuppelbar sind.

Erfindungsgemäß trägt daher die Abtriebswelle keine Festzahnräder der ersten, zweiten und dritten Radebene des ersten Teilgetriebes. Dadurch kann die Abtriebswelle im Vergleich zum obigen Stand der Technik wesentlich materialreduzierter ausgelegt sein. Zudem können mittels des ersten Schaltelementes (SE-F) die erste, zweite und dritte Radebene vom aktivierten Teilgetriebe zumindest teilweise vom Momentenfluss abgekoppelt (das heißt stillgelegt) sein, wodurch das Trägheitsmoment des aktivierten ersten Teilgetriebes reduzierbar ist. Dies führt bei einem Schaltvorgang zu einer Verkürzung von Schaltzeiten bzw. zu einer Reduzierung des für den Schaltvorgang erforderlichen Energieaufwandes.

Das im ersten Teilgetriebe auf der Abtriebsseite angeordnete erste Schaltelement (SE-F) weist in der Axialrichtung auf der einen Seite des ersten Schaltelements (SE-F) ein auf der Abtriebswelle gelagertes abtriebsseitiges Loszahnrad der dritten Radebene des ersten Teilgetriebes auf und axial gegenüberliegend eine auf der Abtriebswelle koaxial drehgelagerte, abtriebsseitige Hohlwelle auf. Die abtriebsseitige Hohlwelle des ersten Teilgetriebes sowie das abtriebsseitige Loszahnrad sind mittels des ersten Schaltelementes (SE-F) alternierend mit der Abtriebswelle kuppelbar. Auf der Hohlwelle sind die abtriebsseitigen Zahnräder der ersten und zweiten Radebenen (RE-1), (RE-2) drehfest angeordnet.

Das erste Teilgetriebe weist zudem eine vierte Radebene auf, deren abtriebsseitiges Zahnrad drehfest auf der Abtriebswelle angeordnet ist. Auf der Antriebsseite des ersten Teilgetriebes weist die erste Eingangswelle genau ein in Axialrichtung beidseitig wirkendes zweites Schaltelement (SE-C) auf. Mittels des zweiten Schaltelementes (SE-C) ist die erste Eingangswelle mit sämtlichen Radebenen des ersten Teilgetriebes kuppelbar oder davon abkuppelbar.

Das beidseitig schaltbare zweite Schaltelement verbindet entweder ein auf der ersten Eingangswelle gelagertes Loszahnrad der ersten Radebene oder eine auf der ersten Eingangswelle koaxial gelagerte Hohlwelle trieblich mit der ersten Eingangswelle. Die auf der ersten Eingangswelle gelagerte antriebsseitige Hohlwelle trägt die antriebsseitigen Festzahnräder der zweiten und dritten Radebenen. Zudem ist auf der antriebsseitigen Hohlwelle des ersten Teilgetriebes ein antriebsseitiges Zahnrad der vierten Radebene losgelagert. Das antriebsseitige Zahnrad der vierten Radebene ist über ein drittes Schaltelement mit der antriebsseitigen Hohlwelle des ersten Teilgetriebes kuppelbar.

Das zweite Teilgetriebe weist eine, dem ersten Teilgetriebe in Axialrichtung unmittelbar angrenzende fünfte Radebene (RE-5) auf. Die fünfte Radebene (RE-5) ist mittels des dritten Schaltelements (SE-D) mit dem ersten Teilgetriebe kuppelbar. In einer Weiterbildung der Erfindung kann die fünfte Radebene ein antriebsseitiges Zahnrad aufweisen, das auf der zweiten Eingangswelle drehbar gelagert ist und mittels des obigen dritten Schaltelementes mit dem ersten Teilgetriebe kuppelbar ist. Auf diese Weise kann die fünfte Radebene auf beide Teilgetriebe geschaltet werden.

Wie oben erwähnt, weist die erste Eingangswelle des ersten Teilgetriebes genau ein, beidseitig schaltbares zweites Schaltelement auf. In gleicher Weise kann auch die zweite Eingangswelle des zweiten Teilgetriebes ein, bevorzugt beidseitig schaltbares viertes Schaltelement (SE-A) aufweisen. Mittels des vierten Schaltelementes kann die zweite Eingangswelle mit der sechsten, siebten und achten Radebene des zweiten Teilgetriebes kuppelbar oder davon abkuppelbar sein.

Das von der zweiten Eingangswelle getragene vierte Schaltelement kann in einer technischen Umsetzung entweder ein auf der zweiten Eingangswelle gelagertes antriebsseitiges Loszahnrad einer achten Radebene oder eine auf der zweiten Eingangswelle koaxial gelagerte antriebsseitige Hohlwelle des zweiten Teilgetriebes mit der zweiten Eingangswelle trieblich verbinden. Die antriebsseitige Hohlwelle des zweiten Teilgetriebes kann ein antriebsseitiges Festzahnrad der siebten Radebene tragen. Zusätzlich kann auf der antriebsseitigen Hohlwelle des zweiten Teilgetriebes ein antriebsseitiges Zahnrad der sechsten Radebene lose gelagert sein. Die Hohlwelle kann mit einem fünften Schaltelement (SE-B) trieblich mit dem losgelagerten antriebsseitigen Zahnrad der sechsten Radebene verbindbar sein.

In Doppelfunktion kann das fünfte Schaltelement (SE-B) auch das antriebsseitige Zahnrad der auf die beiden Teilgetriebe schaltbaren Radebene (RE-5) an die antriebsseitige Hohlwelle des zweiten Teilgetriebes kuppeln.

Wie oben erwähnt, ist im ersten Teilgetriebe auf der Abtriebswelle eine Hohlwelle koaxial gelagert, auf der die abtriebsseitigen Zahnräder der ersten und zweiten Radebenen drehfest angeordnet sind. In gleicher Weise kann auch im zweiten Teilgetriebe eine abtriebsseitige Hohlwelle auf der Abtriebswelle koaxial drehgelagert sein. Auf der abtriebsseitigen Hohlwelle des zweiten Teilgetriebes können die abtriebsseitigen Zahnräder der siebten und achten Radebene drehfest angeordnet sein. Zudem kann die Abtriebswelle im zweiten Teilgetriebe ein sechstes Schaltelement (SE-E) aufweisen, mit dem die abtriebsseitige Hohlwelle des zweiten Teilgetriebes mit der Abtriebswelle kuppelbar ist.

In einer nicht von der Erfindung umfassten Vergleichsform kann das abtriebsseitige Zahnrad der auf beide Teilgetriebe schaltbaren fünften Radebene als ein Festzahnrad drehfest auf der Abtriebswelle angeordnet sein. In diesem Fall würde im Fahrbetrieb die fünfte Radebene ständig mitdrehen und gegebenenfalls die Drehlager vorzeitig verschleißen. Vor diesem Hintergrund ist erfindungsgemäß das abtriebsseitige Zahnrad der fünften Radebene lose auf der Abtriebswelle gelagert und über ein siebtes Schaltelement (SE-G) an die Abtriebswelle kuppelbar.

Wie oben erwähnt, kann ein, die fünfte Radebene bildender Zahnradsatz über das dritte Schaltelement (SE-D), zum Beispiel eine Schaltkupplung, mit dem ersten Teilgetriebe kuppelbar sein. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der, die fünfte Radebene bildende Zahnradsatz zumindest den 3. Vorwärtsgang des zweiten Teilgetriebes bilden, der mittel- oder unmittelbar wahlweise mit der Eingangswelle des ersten oder des zweiten Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der besagte Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer bevorzugten Ausgestaltung der Erfindung kann das Festzahnrad des auf beide Teilgetriebe schaltbaren, die fünfte Radebene bildenden Zahnradsatzes auf der gemeinsamen Abtriebswelle des Doppelkupplungsgetriebes angeordnet sein, während das korrespondierende, schaltbare Loszahnrad steuerungstechnisch einfach mit dem dritten Schaltelement (SE-D) des ersten Teilgetriebes (A) oder mit dem fünften Schaltelement (SE-B) des zweiten Teilgetriebes (B) kuppelbar ist. Die Schaltelemente können dabei Doppelkupplungen sein, mittels denen ein Zahnradsatz des einen Teilgetriebes oder der Zahnradsatz des anderen Teilgetriebes schaltbar ist.

In einer vorteilhaften Weiterbildung der Erfindung werden bei einem 12-Gang Getriebe durch Mehrfachnutzung der die Radebenen bildenden Zahnradsätze nur acht Gangebenen verwendet, wobei der gemeinsam genutzte, die fünfte Radebene bildende Zahnradsatz des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

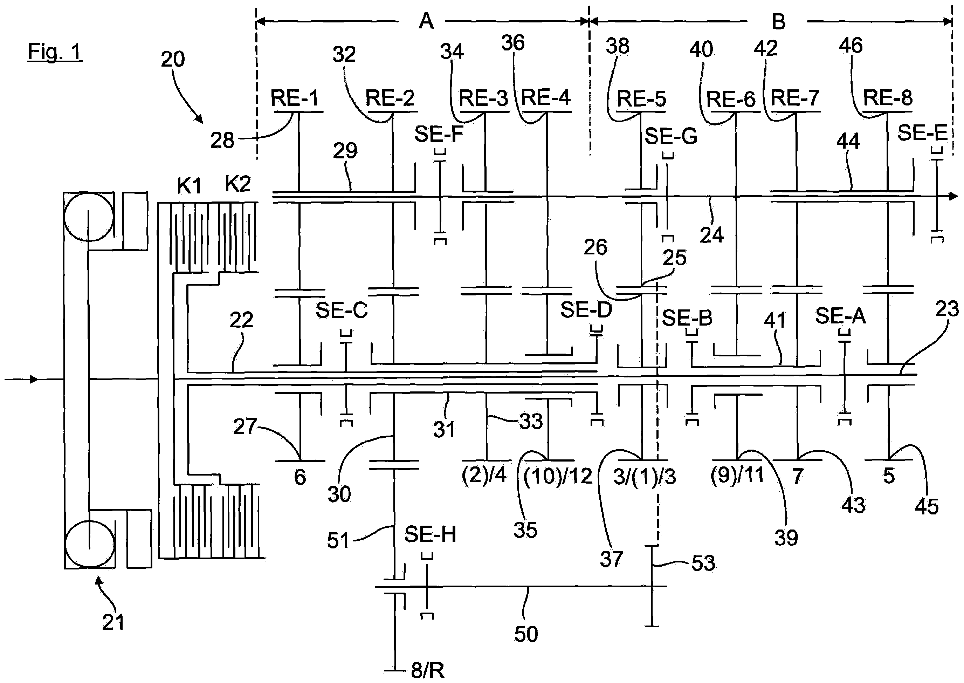

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

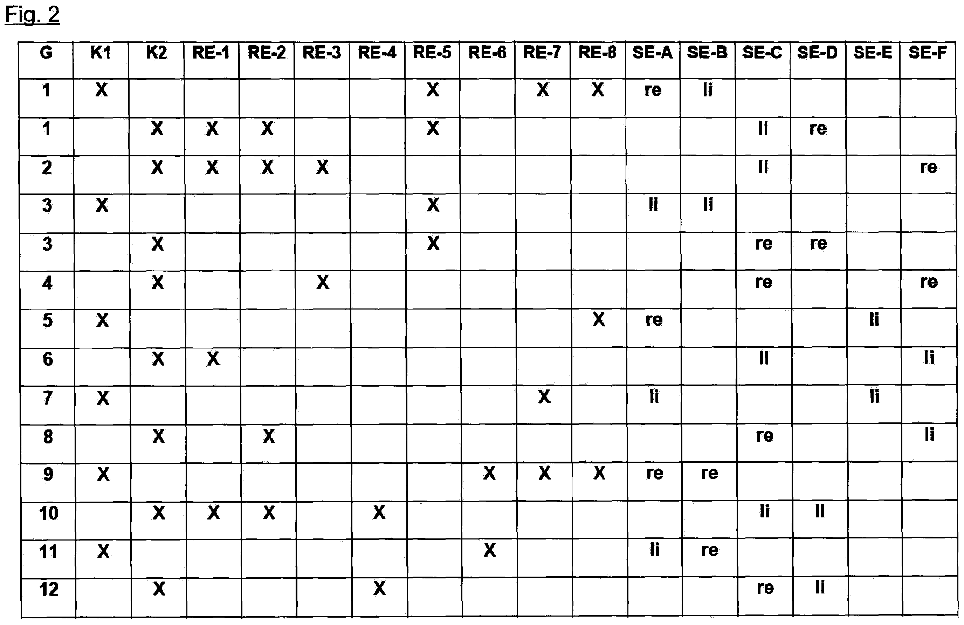

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung mittels der Schaltelemente (SE-A bis SE-G) schaltbar sind, wobei das erste Teilgetriebe (A) zumindest die erste, zweite und dritte Radebene (RE-1, RE-2, RE-3) aufweist, von denen jede Radebene (RE-1, RE-2, RE-3) aus einem zur Eingangswelle (22, 23) koaxialen antriebsseitigen Zahnrad (27, 30, 33) und einem zur Abtriebswelle (24) koaxialen abtriebsseitigen Zahnrad (28, 32, 34) aufgebaut ist, wobei die Abtriebswelle (24) ein, in der Axialrichtung beidseitig schaltbares erstes Schaltelement (SE-F) aufweist, mit dem die erste, zweite und dritte Radebene (RE-1, RE-2, RE-3) des ersten Teilgetriebes (A) mit der Abtriebswelle (24) kuppelbar oder davon abkuppelbar sind, und wobei die abtriebsseitigen Zahnräder (28, 32, 34) der ersten bis dritten Radebenen (RE-1, RE-2, RE-3) lose auf der abtriebsseitigen Abtriebswelle (24) drehgelagert sind, und wobei in der Axialrichtung des ersten Schaltelements (SE-F) auf dessen einer Seite ein auf der Abtriebswelle (24) gelagertes, abtriebsseitiges Loszahnrad (34) der dritten Radebene (RE-3) und auf der anderen Seite des ersten Schaltelements (SE-F) eine auf der Abtriebswelle (24) koaxial gelagerte abtriebsseitige Hohlwelle (29) des ersten Teilgetriebes (A) angeordnet ist, die über das erste Schaltelement (SE-F) alternierend mit der Abtriebswelle (24) kuppelbar sind, und wobei die abtriebsseitige Hohlwelle (29) des ersten Teilgetriebes (A) die abtriebsseitigen Zahnräder (28, 32) der ersten und zweiten Radebene (RE-1, RE-2) drehfest trägt, **dadurch gekennzeichnet, dass** das erste Teilgetriebe (A) eine vierte Radebene (RE-4) aufweist, dessen abtriebsseitiges Zahnrad (36) drehfest auf der Abtriebswelle (24) angeordnet ist, und dass die erste Eingangswelle (22) des ersten Teilgetriebes (A) genau ein in Axialrichtung beidseitig wirkendes zweites Schaltelement (SE-C) aufweist, und dass mittels des zweiten Schaltelements (SE-C) die erste Eingangswelle (22) mit sämtlichen Radebenen (RE-1 bis RE-4) des ersten Teilgetriebes (A) kuppelbar oder davon abkuppelbar ist, dass in der Axialrichtung beidseitig des zweiten Schaltelements (SE-C) jeweils ein auf der ersten Eingangswelle (22) gelagertes, antriebsseitiges Loszahnrad (27) der ersten Radebene (RE-1) und eine auf der ersten Eingangswelle (22) koaxial gelagerte antriebsseitige Hohlwelle (31) des ersten Teilgetriebes (A) angeordnet ist, und dass das Loszahnrad (27) der ersten Radebene (RE-1) und die antriebsseitige Hohlwelle (31) des ersten Teilgetriebes (A) über das zweite Schaltelement (SE-C) alternierend mit der ersten Eingangswelle (22) kuppelbar sind, und dass die antriebsseitige Hohlwelle (31) des ersten Teilgetriebes (A) Festzahnräder (30, 33) der zweiten und dritten Radebenen (RE-2, RE-3) trägt, dass auf der antriebsseitigen Hohlwelle (31) des ersten Teilgetriebes (A) ein antriebsseitiges Zahnrad (35) der vierten Radebene (RE-4) lose gelagert ist, und dass die antriebsseitige Hohlwelle (31) des ersten Teilgetriebes (A) ein drittes Schaltelement (SE-D) aufweist, mit dem das losgelagerte antriebsseitige Zahnrad (35) der vierten Radebene (RE-4) mit der antriebsseitigen Hohlwelle (31) des ersten Teilgetriebes (A) kuppelbar ist, dass das zweite Teilgetriebe (B) eine, dem ersten Teilgetriebe (A) in Axialrichtung unmittelbar angrenzende fünfte Radebene (RE-5) aufweist, und dass die fünfte Radebene (RE-5) mittels eines dritten Schaltelements (SE-D) mit dem ersten Teilgetriebe (A) kuppelbar ist, und dass das abtriebsseitige Zahnrad (38) der fünften Radebene (RE-5) lose auf der Abtriebswelle (24) gelagert ist und über ein siebtes Schaltelement (SE-G) an die Abtriebswelle (24) kuppelbar ist.

2. Doppelkupplungsgetriebe nach Anspruch 1, **dadurch gekennzeichnet, dass** die auf beide Teilgetriebe (A, B) schaltbare fünfte Radebene (RE-5) mit ihrem antriebsseitigen Zahnrad (37) auf der zweiten Eingangswelle (23) lose gelagert ist und mittels des dritten Schaltelements (SE-D) an die antriebsseitige Hohlwelle (31) des ersten Teilgetriebes (A) kuppelbar ist.

3. Doppelkupplungsgetriebe nach einem der vorhergehenden Ansprüche, **dadurch gekennzeichnet, dass** die zweite Eingangswelle (23) des zweiten Teilgetriebes (B) genau ein in Axialrichtung beidseitig schaltbares viertes Schaltelement (SE-A) aufweist, und dass mittels des vierten Schaltelements (SE-A) die zweite Eingangswelle (23) mit der sechsten, siebten und achten Radebene (RE-6 bis RE-8) des zweiten Teilgetriebes (B) kuppelbar oder davon abkuppelbar ist.

4. Doppelkupplungsgetriebe nach Anspruch 3, **dadurch gekennzeichnet, dass** in der Axialrichtung des vierten Schaltelements (SE-A) des zweiten Teilgetriebes (B) auf der einen Seite des vierten Schaltelements (SE-A) ein auf der zweiten Eingangswelle (23) gelagertes, antriebsseitiges Loszahnrad (45) einer achten Radebene (RE-8) und auf der anderen Seite des vierten Schaltelements (SE-A) eine auf der zweiten Eingangswelle (23) koaxial gelagerte antriebsseitige Hohlwelle (41) des zweiten Teilgetriebes (B) angeordnet ist, die über das vierte Schaltelement (SE-A) alternierend mit der zweiten Eingangswelle (23) kuppelbar sind, und dass die antriebsseitige Hohlwelle (41) des zweiten Teilgetriebes (B) zumindest ein Festzahnrad (43) einer siebten Radebene (RE-7) trägt.

5. Doppelkupplungsgetriebe nach Anspruch 4, **dadurch gekennzeichnet, dass** auf der antriebsseitigen Hohlwelle (41) des zweiten Teilgetriebes (B) ein antriebsseitiges Zahnrad (39) einer sechsten Radebene (RE-6) lose gelagert ist, und dass die antriebsseitige Hohlwelle (41) des zweiten Teilgetriebes (B) mittels eines fünften Schaltelements (SE-B) mit dem losgelagerten antriebsseitigen Zahnrad (39) der sechsten Radebene (RE-6) kuppelbar ist.

6. Doppelkupplungsgetriebe nach Anspruch 5, **dadurch gekennzeichnet, dass** das antriebsseitige Zahnrad (37) der auf beide Teilgetriebe (A, B) schaltbaren fünften Radebene (RE-5) mittels des fünften Schaltelements (SE-B) an die antriebsseitige Hohlwelle (41) des zweiten Teilgetriebes (B) kuppelbar ist.

7. Doppelkupplungsgetriebe nach einem der vorhergehenden Ansprüche, **dadurch gekennzeichnet, dass** die abtriebsseitigen Zahnräder (42, 46) der siebten und achten Radebenen (RE-7, RE-8) des zweiten Teilgetriebes (B) drehfest auf einer abtriebsseitigen Hohlwelle (44) des zweiten Teilgetriebes (B) angeordnet sind, die koaxial auf der Abtriebswelle (24) drehbar gelagert ist.

8. Doppelkupplungsgetriebe nach Anspruch 7, **dadurch gekennzeichnet, dass** die Abtriebswelle (24) ein sechstes Schaltelement (SE-E) aufweist, mittels dem die abtriebsseitige Hohlwelle (44) des zweiten Teilgetriebes (B) mit der Abtriebswelle (24) kuppelbar ist.

## Claims

1. Dual clutch transmission for a motor vehicle, comprising gear sets which can be shifted by shift elements and which form precisely eight gear stages (RE-1 to RE-8) arranged in the axial direction from the input side to the output side of the dual clutch transmission in the order first to eighth, which each belong to a first sub-transmission (A) and a second sub-transmission (B), of which the first sub-transmission (A) comprises a first input shaft (22) and the second sub-transmission (B) comprises a second input shaft (23), and both sub-transmissions (A, B) comprise a common output shaft (24), wherein the coaxial input shafts (22, 23) can be activated in alternation via respective power-shiftable clutches (K1, K2), and wherein the even forward gears (2, 4, 6, 8, 10, 12) belong to the first sub-transmission (A) and the odd forward gears (1, 3, 5, 7, 9, 11) belong to the second sub-transmission (B), which during a gearshift can be shifted by means of shift elements (SE-A to SE-G), wherein the first sub-transmission (A) comprises at least the first, second and third gear stage (RE-1, RE-2, RE-3), each gear stage (RE-1, RE-2, RE-3) of which is formed from a drive-side gear (27, 30, 33) mounted coaxial to the input shaft (22, 23) and an output-side gear (28, 32, 34) mounted coaxial to the output shaft (24), wherein the output shaft (24) comprises a first shift element (SE-F) that is shiftable on both sides in the axial direction, by means of which the first, second and third gear stage (RE-1, RE-2, RE-3) of the first sub-transmission (A) can be coupled to or uncoupled from the output shaft (24), and wherein the output-side gears (28, 32, 34) of the first to third gear stages (RE-1, RE-2, RE-3) are rotatably mounted loosely on the output-side output shaft (24), and wherein, in the axial direction of the first shift element (SE-F), on one side a drive-side idler gear (34) of the third gear stage (RE-3) is arranged mounted on the output shaft (24), and on the other side of the first shift element (SE-F) an output-side hollow shaft (29) of the first sub-transmission (A) is arranged coaxially mounted on the output shaft (24), which can be coupled in alternation to the output shaft (24) by means of the first shift element (SE-F), and wherein the output-side hollow shaft (29) of the first sub-transmission (A) carries, rotationally fixed, the output-side gears (28, 32) of the first and second gear stage (RE-1, RE-2), **characterised in that** the first sub-transmission (A) comprises a fourth gear stage (RE-4), of which the output-side gear (36) is arranged rotationally fixed on the output shaft (24), and **in that** the first input shaft (22) of the first sub-transmission (A) comprises exactly one second shift element (SE-C) acting on both sides in the axial direction, and **in that**, by means of the second shift element (SE-C), the first input shaft (22) can be coupled to or uncoupled from all of the gear stages (RE-1 to RE-4) of the first sub-transmission (A), **in that**, in the axial direction, a drive-side idler gear (27) of the first gear stage (RE-1), mounted on the first input shaft (22) and a drive-side hollow shaft (31) of the first sub-transmission (A) mounted coaxially on the first input shaft (22), are respectively arranged on both sides of the second shift element (SE-C), and **in that** the idler gear (27) of the first gear stage (RE-1) and the drive-side hollow shaft (31) of the first sub-transmission (A) can be coupled, in alternation, to the first input shaft (22) via the second shift element (SE-C), and **in that** the drive-side hollow shaft (31) of the first sub-transmission (A) carries fixed gears (30, 33) of the second and third gear stages (RE-2, RE-3), **in that** a drive-side gear (35) of the fourth gear stage (RE-4) is loosely mounted on the drive-side hollow shaft (31) of the first sub-transmission (A), and **in that** the drive-side hollow shaft (31) of the first sub-transmission (A) comprises a third shift element (SE-D), by means of which the loosely mounted drive-side gear (35) of the fourth gear stage (RE-4) can be coupled to the drive-side hollow shaft (31) of the first sub-transmission, **in that** the second sub-transmission (B) comprises a fifth gear stage (RE-5) directly adjacent to the first sub-transmission (A) in the axial direction, and **in that** the fifth gear stage (RE-5) can be coupled to the first sub-transmission (A) by means of a third shift element (SE-D), and **in that** the output-side gear (38) of the fifth gear stage (RE-5) is loosely mounted on the output shaft (24) and can be coupled to the output shaft (24) by means of a seventh shift element (SE-G).

2. Dual clutch transmission according to claim 1, **characterised in that** the fifth gear stage (RE-5) which is shiftable on both sub-transmissions (A, B) is loosely mounted by means of its drive-side gear (37) on the second input shaft (23) and can be coupled to the drive-side hollow shaft (31) of the first sub-transmission (A) by means of the third shift element (SE-D).

3. Dual clutch transmission according to any of the preceding claims, **characterised in that** the second input shaft (23) of the second sub-transmissions (B) comprises exactly one fourth shift element (SE-A) shiftable on both sides in the axial direction, and **in that**, by means of the fourth shift element (SE-A), the second input shaft (23) can be coupled to or uncoupled from the sixth, seventh and eighth gear stages (RE-6 to RE-8) of the second sub-transmission (B).

4. Dual clutch transmission according to claim 3, **characterised in that**, in the axial direction of the fourth shift element (SE-A) of the second sub-transmission (B), on one side of the fourth shift element (SE-A) a drive-side idler gear (45) of an eighth gear stage (RE-8) is arranged mounted on the second input shaft (23), and on the other side of the fourth shift element (SE-A) a drive-side hollow shaft (41) of the second sub-transmission (B) is arranged coaxially mounted on the second input shaft (23), which can be coupled, in alternation, to the second input shaft (23) via the fourth shift element (SEA), and **in that** the drive-side hollow shaft (41) of the second sub-transmission (B) carries at least one fixed gear (43) of a seventh gear stage (RE-7).

5. Dual clutch transmission according to claim 4, **characterised in that** a drive-side gear (39) of the sixth gear stage (RE-6) is loosely mounted on the drive-side hollow shaft (41) of the second sub-transmission (B), and **in that** the drive-side hollow shaft (41) of the second sub-transmission (B) can be coupled by means of a fifth shift element (SE-B) to the loosely mounted drive-side gear (39) of the sixth gear stage (RE-6).

6. Dual clutch transmission according to claim 5, **characterised in that** the drive-side gear (37) of the fifth gear stage (RE-5) which is shiftable on both sub-transmissions (A, B), can be coupled by means of the fifth shift element (SE-B) to the drive-side hollow shaft (41) of the second sub-transmission (B).

7. Dual clutch transmission according to any of the preceding claims, **characterised in that** the output-side gears (42, 46) of the seventh and eighth gear stages (RE-7, RE-8) of the second sub-transmission (B) are arranged rotationally fixed on an output-side hollow shaft (44) of the second sub-transmission (B), which is rotatably mounted coaxially on the output shaft (24).

8. Dual clutch transmission according to claim 7, **characterised in that** the output shaft (24) comprises a sixth shift element (SE-E), by means of which the output-side hollow shaft (44) of the second sub-transmission (B) can be coupled to the output shaft (24).

## Revendications

1. Transmission à double embrayage pour un véhicule automobile, avec des jeux de roues dentées qui peuvent être commutés par l'intermédiaire d'éléments de commutation et qui forment exactement huit plans de roue (RE-1 à RE-8) agencés les uns derrière les autres dans l'ordre du premier au huitième dans la direction axiale du côté entrée au côté sortie de la transmission à double embrayage, lesquels plans de roue sont associés respectivement à une première transmission partielle (A) et à une deuxième transmission partielle (B), laquelle première transmission partielle (A) comporte un premier arbre d'entrée (22) et laquelle deuxième transmission partielle (B) comporte un deuxième arbre d'entrée (23) et les deux transmissions partielles (A, B) comportent un arbre de sortie (24) commun, dans laquelle les arbres d'entrée (22, 23) coaxiaux peuvent être activés alternativement par l'intermédiaire à chaque fois d'une liaison (K1, K2) commutable en charge et les rapports de marche avant pairs (2, 4, 6, 8, 10, 12) sont associés à la première transmission partielle (A) et les rapports de marche avant impairs (1, 3, 5, 7, 9, 11) sont associés à la deuxième transmission partielle (B), lesquels rapports peuvent être commutés lors d'un changement de rapport au moyen des éléments de commutation (SE-A à SE-G), dans laquelle la première transmission partielle (A) comporte au moins les premier, deuxième et troisième plans de roue (RE-1, RE-2, RE-3), parmi lesquels chaque plan de roue (RE-1, RE-2, RE-3) est construit à partir d'une roue dentée (27, 30, 33) côté entraînement qui est coaxiale par rapport à l'arbre d'entrée (22, 23) et d'une roue dentée (28, 32, 34) côté sortie qui est coaxiale par rapport à l'arbre de sortie (24), dans laquelle l'arbre de sortie (24) comporte un premier élément de commutation (SE-F) qui peut être commuté des deux côtés dans la direction axiale et avec lequel les premier, deuxième et troisième plans de roue (RE-1, RE-2, RE-3) de la première transmission partielle (A) peuvent être couplés avec l'arbre de sortie (24) ou découplés de celui-ci, et dans laquelle les roues dentées côté sortie (28, 32, 34) des premier au troisième plans de roue (RE-1, RE-2, RE-3) sont montées en rotation libre sur l'arbre de sortie côté sortie (24), et dans laquelle, dans la direction axiale du premier élément de commutation (SE-F), sur un côté de celui-ci, est agencée une roue dentée mobile (34), côté sortie et montée sur l'arbre de sortie (24), du troisième plan de roue (RE-3) et, sur l'autre côté du premier élément de commutation (SE-F), est agencé un arbre creux (29), côté sortie et monté de manière coaxiale sur l'arbre de sortie (24), de la première transmission partielle (A), lesquels peuvent être couplés en alternance avec l'arbre de sortie (24) par l'intermédiaire du premier élément de commutation (SE-F), et dans laquelle l'arbre creux côté sortie (29) de la première transmission partielle (A) porte de manière solidaire en rotation les roues dentées côté sortie (28, 32) des premier et deuxième plans de roue (RE-1, RE-2), **caractérisée en ce que** la première transmission partielle (A) comporte un quatrième plan de roue (RE-4) dont la roue dentée côté sortie (36) est agencée de manière solidaire en rotation sur l'arbre de sortie (24), et **en ce que** le premier arbre d'entrée (22) de la première transmission partielle (A) comporte exactement un deuxième élément de commutation (SE-C) agissant des deux côtés dans la direction axiale, et **en ce que**, au moyen du deuxième élément de commutation (SEC), le premier arbre d'entrée (22) peut être couplé avec tous les plans de roue (RE-1 bis RE-4) de la première transmission partielle (A) ou être découplé de ceux-ci, **en ce que**, des deux côtés du deuxième élément de commutation (SE-C) dans la direction axiale, sont agencés respectivement une roue dentée mobile (27), côté entraînement et montée sur le premier arbre d'entrée (22), du premier plan de roue (RE-1) et un arbre creux (31), côté entraînement et monté de manière coaxiale sur le premier arbre d'entrée (22), de la première transmission partielle (A), et **en ce que** la roue dentée mobile (27) du premier plan de roue (RE-1) et l'arbre creux côté entraînement (31) de la première transmission partielle (A) peuvent être couplés en alternance avec le premier arbre d'entrée (22) par l'intermédiaire du deuxième élément de commutation (SE-C), et **en ce que** l'arbre creux côté entraînement (31) de la première transmission partielle (A) porte des roues dentées solidaires (30, 33) des deuxième et troisième plans de roue (RE-2, RE-3), **en ce que**, sur l'arbre creux côté entraînement (31) de la première transmission partielle (A), une roue dentée côté entraînement (35) du quatrième plan de roue (RE-4) est montée de manière libre, et **en ce que** l'arbre creux côté entraînement (31) de la première transmission partielle (A) comporte un troisième élément de commutation (SE-D) avec lequel la roue dentée côté entraînement (35), montée de manière libre, du quatrième plan de roue (RE-4) peut être couplée à l'arbre creux côté entraînement (31) de la première transmission partielle (A), **en ce que** la deuxième transmission partielle (B) comporte un cinquième plan de roue (RE-5) directement adjacent à la première transmission partielle (A) dans la direction axiale, et **en ce que** le cinquième plan de roue (RE-5) peut être couplé à la première transmission partielle (A) au moyen d'un troisième élément de commutation (SE-D), et **en ce que** la roue dentée côté sortie (38) du cinquième plan de roue (RE-5) est montée de manière mobile sur l'arbre de sortie (24) et peut être couplée à l'arbre de sortie (24) par l'intermédiaire d'un septième élément de commutation (SE-G).

2. Transmission à double embrayage selon la revendication 1, **caractérisée en ce que** le cinquième plan de roue (RE-5) pouvant être commuté sur les deux transmissions partielles (A, B) est monté de manière mobile avec sa roue dentée côté entraînement (37) sur le deuxième arbre d'entrée (23) et peut être couplé au moyen du troisième élément de commutation (SE-D) à l'arbre creux côté entraînement (31) de la première transmission partielle (A).

3. Transmission à double embrayage selon l'une quelconque des revendications précédentes, **caractérisée en ce que** le deuxième arbre d'entrée (23) de la deuxième transmission partielle (B) comporte exactement un quatrième élément de commutation (SE-A) qui peut être commuté des deux côtés dans la direction axiale et **en ce que**, au moyen du quatrième élément de commutation (SE-A), le deuxième arbre d'entrée (23) peut être couplé aux sixième, septième et huitième plans de roue (RE-6 à RE-8) de la deuxième transmission partielle (B) ou être découplé de ceux-ci.

4. Transmission à double embrayage selon la revendication 3, **caractérisée en ce que,** dans la direction axiale du quatrième élément de commutation (SE-A) de la deuxième transmission partielle (B), sur l'un côté du quatrième élément de commutation (SE-A), est agencée une roue dentée mobile (45), côté entraînement et montée sur le deuxième arbre d'entrée (23), d'un huitième plan de roue (RE-8) et, sur l'autre côté du quatrième élément de commutation (SE-A), est agencé un arbre creux (41), côté entraînement et monté de manière coaxiale sur le deuxième arbre d'entrée (23), de la deuxième transmission partielle (B), lesquels peuvent être couplés en alternance avec le deuxième arbre d'entrée (23) par l'intermédiaire du quatrième élément de commutation (SE-A), et **en ce que** l'arbre creux côté entraînement (41) de la deuxième transmission partielle (B) porte au moins une roue dentée solidaire (43) d'un septième plan de roue (RE-7).

5. Transmission à double embrayage selon la revendication 4, **caractérisée en ce que,** sur l'arbre creux côté entraînement (41) de la deuxième transmission partielle (B), une roue dentée côté entraînement (39) d'un sixième plan de roue (RE-6) est montée de manière mobile, et **en ce que** l'arbre creux côté entraînement (41) de la deuxième transmission partielle (B) peut être couplé au moyen d'un cinquième élément de commutation (SE-B) avec la roue dentée (39), côté entraînement et montée de manière mobile, du sixième plan de roue (RE-6).

6. Transmission à double embrayage selon la revendication 5, **caractérisée en ce que** la roue dentée côté entraînement (37) du cinquième plan de roue (RE-5) pouvant être commuté sur les deux transmissions partielles (A, B) peut être couplée au moyen du cinquième élément de commutation (SE-B) à l'arbre creux côté entraînement (41) de la deuxième transmission partielle (B).

7. Transmission à double embrayage selon l'une quelconque des revendications précédentes, **caractérisée en ce que** les roues dentées côté sortie (42, 46) des septième et huitième plans de roue (RE-7, RE-8) de la deuxième transmission partielle (B) sont agencées de manière solidaire en rotation sur un arbre creux côté sortie (44) de la deuxième transmission partielle (B), lequel arbre creux est monté rotatif de manière coaxiale sur l'arbre de sortie (24).

8. Transmission à double embrayage selon la revendication 7, **caractérisée en ce que** l'arbre de sortie (24) comporte un sixième élément de commutation (SE-E) au moyen duquel l'arbre creux côté sortie (44) de la deuxième transmission partielle (B) peut être couplé à l'arbre de sortie (24).
